# EUROPÄISCHE PATENTSCHRIFT

(11) **EP 1 655 207 B1**
(45) Veröffentlichungstag und Bekanntmachung des Hinweises auf die Patenterteilung: **24.09.2008**
(21) Anmeldenummer: 05022319.7
(22) Anmeldetag: 13.10.2005
(51) Int. Cl.: B62D 25/02

(54) **Seitenwand eines Kraftfahrzeugs**
Vehicle body side panel
Panneau latéral de carrosserie de véhicule

(30) Priorität: 05.11.2004 DE 102004053917
(43) Veröffentlichungstag der Anmeldung: 10.05.2006
(73) Patentinhaber: Benteler Automobiltechnik GmbH, 33104 Paderborn (DE)
(72) Erfinder: Fischer, Jochem, 73760 Ostfildern (DE); Druhmann, Sven, 33649 Bielefeld (DE); Tjoelker, Todd, 33014 Bad Driburg (DE); Böhmer, Werner, 34439 Willebadessen (DE)
(74) Vertreter: Griepenstroh, Jörg

(56) Entgegenhaltungen:
- EP-A- 1 172 454
- EP-A- 1 180 470
- EP-A2- 0 816 520
- EP-A2- 1 052 295
- WO-A-20/04076266
- DE-A1- 10 128 989

## Beschreibung

Die Erfindung betrifft eine Seitenwand eines Kraftfahrzeugs mit den Merkmalen des Oberbegriffs des Patentanspruchs 1 bzw. des Patentanspruchs 2.

Es ist Stand der Technik, dass die strukturverstärkende Fahrzeugseitenwand aus mehreren Einzelbauteilen zusammengestellt wird. Im Vordertürbereich besteht die Fahrzeugseitenwand beispielsweise aus der A-Säule mit einer Schwelleranbindung. Die B-Säule und der Schweller sind separate Bauteile. Die einzelnen Bauteile werden teilweise im Warmformprozess hergestellt und vergütet und müssen unter Umständen verschiedene Materialdicken und Festigkeitsanforderungen erfüllen. Nach der Herstellung der Einzelteile werde diese durch Punktschweißung oder Klebung zu einer Seitenwand eines Kraftfahrzeugs zusammengefügt. An den Fügestellen können Spannungsspitzen entstehen. Für eine schweißtechnische Verbindung sind Materialüberlappungen erforderlich. Das wirkt sich negativ auf das Fahrzeuggesamtgewicht aus.

Obwohl einzelne Komponenten einer Seitenwand eines Kraftfahrzeugs stark unterschiedlichen Belastungen unterworfen sind, ist ein kontinuierlicher Übergang zwischen unterschiedlichen Materialfestigkeiten bislang nicht möglich.

In tipstrends.online@3sat.de vom 09.06.2000; URL: http//www.3sat.de/Tipps/aktuell/7566 und 3sat-Sendung "Tips & Trends mobil2000" vom 10.06.2000 wird die Audi A2-Produktion beschrieben. Erstmalig kommen danach beim Audi A2 einteilig hergestellte Seitenwände aus Aluminium zum Einsatz. Durch die reduzierte Anzahl der Karosserie-Hauptbauteile ließ sich das Gewicht entscheidend verringern. Die gesamte Rohkarosserie ist inklusive Türen und Heckklappe um mehr als 40 % leichter als eine entsprechende Stahlblech-Konstruktion. In Wirtschaftswoche 4-2001; URL: http://www.berlinews.de/archiv/1629.shtml "Innovationspreis" wird ferner ausgeführt, dass der Audi A2 dadurch deutlich weniger verbraucht als andere Fahrzeuge dieser Klasse mit vergleichbaren Fahrleistungen.

Bei Aluminium handelt es sich um einen Leichtbauwerkstoff mit einem deutlich höheren Kilopreis als klassische Konstruktionsstähle, so dass der Gewichtsvorteil relativ teuer erkauft wird.

Die DE 1 172 454 A1 offenbart eine Seitenwand eines Kraftfahrzeugs mit einem im unteren Bereich verlaufenden Schweller, mit einem Dachrahmenbereich und mit sich zwischen dem Schweller und dem Dachrahmenbereich erstreckenden Säulen, wobei der Schweller, die Säulen und der Dachrahmenbereich einstückig aus einer entsprechend großen Blechplatine gefertigt sind. Die Blechplatine besteht aus einem Stahlwerkstoff mit einer Streckgrenze von 500 MPa oder weniger, wobei Bereiche der Seitenwand partiell gehärtet sind. Dadurch kann eine insgesamt dünnere Blechplatine eingesetzt und Gewicht eingespart werden.

Aus der EP 1 180 470 A1 ist eine B-Säule für ein Kraftfahrzeug bekannt. Die B-Säule besteht aus einem härtbaren Stahl, der Längenabschnitte mit unterschiedlichem Werkstoffgefüge auf Grund einer Wärmebehandlung aufweist, um das Bauteil hinsichtlich des Crashverhaltens und der Herstellungskosten sowie unter dem Gesichtspunkt einer Gewichtsreduzierung zu verbessern.

Eine äußere Seitenwand für eine Kraftfahrzeugkarosserie ist Gegenstand der DE 101 28 989 A1. Es wird vorgeschlagen, die dem Fahrgastraum abgewandte Außenseite der äußeren Seitenwand im Bereich mindestens einer Fahrzeugsäule ohne Stufensprung in den angrenzenden Schwellerbereich übergehen zu lassen, um die Umformwege klein zu halten und um auf diese Weise höherfeste Stähle mit Streckgrenzen im Bereich zwischen 180 und 220 N/mm² einsetzen zu können. Auch aus der EP 0 816 520 A2 ist das Einstellen bestimmter Härteverläufe bei Strukturbauteilen von Kraftfahrzeugen, insbesondere bei einer B-Säule, bekannt. In dieser Druckschrift werden kontinuierliche Übergänge zwischen unterschiedlich harten Bereichen vorgeschlagen.

Mit der gleichen Thematik befasst sich die EP 1 052 295 A2. Strukturteile sollen wenigstens partiell auf die zum Härten erforderliche Austenitisierungstemperatur mittels eines Bauteil angepassten Induktors erwärmt werden, um sie mit einer dem Induktor in Bewegungsrichtung nachgeführten Kühleinheit abzuschrecken, mit dem Ziel, schroffe Festigkeitssprünge zu vermeiden. Schließlich zählt durch die WO 2004/076 266 A3 eine spezielle Edelstahllegierung zum Stand der Technik, die insbesondere als Ausgangswerkstoff für Blechprofile von Kraftfahrzeugen geeignet ist. Mit dieser Edelstahllegierung soll die Aufgabe gelöst werden, Teile der Fahrzeugkarosserie zu schaffen, die ein sehr gutes Crashverhalten bei einem geringen Eigengewicht aufweisen.

Hiervon ausgehend liegt der Erfindung die Aufgabe zugrunde, eine Seitenwand eines Kraftfahrzeugs aufzuzeigen, welche mit geringerem Fertigungsaufwand herstellbar ist, einen kontinuierlichen Übergang zwischen unterschiedlichen Materialfestigkeiten erlaubt und zudem unter Einsatz günstiger Werkstoffe optimal auf die zu erwartenden Lastfälle eingestellt ist.

Diese Aufgabe wird jeweils mit den Merkmalen der Patentansprüche 1 und 2 gelöst.

Wesentlich ist zunächst, dass der Schweller, die Säulen und der Dachrahmenbereich der Seitenwand einstückig aus einer einzigen, entsprechend groß bemessenen Blechplatine gefertigt sind. Durch die Verwendung einer einzigen Blechplatine für sämtliche vorgenannten Bestandteile der Seitenwand eines Kraftfahrzeugs wird der Herstellungsaufwand erheblich reduziert. Für die gesamte Bauteilkombination ist nur ein einziger Pressvorgang erforderlich. Der bisherige Fügeaufwand für den Zusammenbau entfällt gänzlich. Festigkeitsreduzierende Fügestellen kommen nicht vor. Zugleich wird das Bauteilgewicht durch den Wegfall von bislang erforderlichem Materialüberlappungen reduziert. Mit der einstückigen Fertigung der Seitenwand aus nur einer Blechplatine ist ein kontinuierlicher Übergang zwischen unterschiedlichen Materialfestigkeiten innerhalb eines Bauteils möglich, wobei die in einem Crashfall hochbelasteten Bereiche der Seitenwand partiell gehärtet sind.

Vorzugsweise kommt eine Blechplatine aus einer Stahllegierung mit einem Kohlenstoffanteil zwischen 0,15 Gew.-% bis 2,0 Gew.-% zum Einsatz. Dieser Werkstoff lässt sich wirtschaftlich partiell vergüten sowie auch warm umformen und weist die notwendigen Werkstoffeigenschaften hinsichtlich der geforderten Festigkeit auf.

Insbesondere bietet sich eine Stahllegierung an, die in Gewichtsprozenten ausgedrückt besteht aus Kohlenstoff (C) 0,18 % bis 0,3 %, Silizium (Si) 0,1 % bis 0,7 %, Mangan (Mn) 1,0 % bis 2,50 %, Chrom (Cr) 0,1 % bis 0,8 %, Molybdän (Mo) 0,1 % bis 0,5 %, Titan (Ti) 0,02 % bis 0,05 %, Bor (B) 0,002 % bis 0,05 %, Aluminium (Al) 0,01 % bis 0,06 %, Schwefel (S) max. 0,01 %, Phosphor (P) max. 0,025 %, wobei der Rest aus Eisen (Fe) besteht, einschließlich etwaiger erschmelzungsbedingter Verunreinigungen. Dieser Stahlwerkstoff wird vorzugsweise warm umgeformt.

Des Weiteren kann auch die Verwendung einer aluminierten Blechplatine zur Herstellung der Seitenwand vorteilhaft sein. Eine solche Blechplatine ist auf Aluminiumbasis vorbeschichtet. Hierdurch wird die Blechplatine vor einer Entkohlung während der Wärmebehandlung geschützt und andererseits deren Korrosionsbeständigkeit gesteigert. Eine korrosionsverhindernde Nachbehandlung kann in der Regel eingespart werden. Die Aluminiumbeschichtung enthält ca. 90 % Aluminium und 10 % Silizium. Beide Legierungen zeichnen sich durch hervorragende mechanische Eigenschaften aus und ermöglichen signifikante Gewichtseinsparungen.

Die Platine wird idealerweise in einem Arbeitsgang geformt und vergütet, mit dem Ziel, die in einem Crashfall des Kraftfahrzeugs hochbelasteten Bereiche der Seitenwand partiell zu härten.

Als Ausgangsmaterial kommt eine Blechplatine mit gewichtsoptimierten Bereichen zum Einsatz. Die Blechplatine weist durch teilweises Abwalzen Bereiche unterschiedlicher Dicke auf. Auch der Einsatz von zum Beispiel lasergeschweißten Platinen unterschiedlicher Materialdicken ist denkbar. Entscheidend hierbei ist, dass die Blechplatine vor der Umformung zu der Seitenwand als ein großes Halbzeug insgesamt umgeformt wird und dass im Anschluss an die Umformung keine weiteren Fügeoperationen erforderlich sind, um beispielsweise den Schweller über eine Säule mit dem Dachrahmenbereich zu verbinden.

Die adaptive Vergütung gelingt durch den Einsatz eines Warmformwerkzeuges mit unterschiedlichen Vergütungszonen, durch welche unterschiedliche Festigkeitsanforderungen einzelner Bereiche sowie die Toleranzforderungen an das Gesamtbauteil realisiert und eingehalten werden. Nachträgliche Fügeoperationen entfallen vollständig. Die Herstellung einer strukturverstärkenden Fahrzeugseitenwand im Warmformprozess aus einer Blechplatine aus hochfestem Material ermöglicht beispielsweise die Ausbildung von Bereichen größerer Dicke, mit reduzierter Härte und gleichzeitig die Ausbildung von Bereichen geringerer Dicke aber größerer Härte. Die partiell gehärteten Bereiche, insbesondere im Bereich der A-, B-, gegebenenfalls C/D-Säule und dem Schwellerbereich dienen zur gezielten Aufnahme der Crashenergie und definieren den überlebensnotwendigen Raum für die Insassen des Kraftfahrzeugs. Ein wesentlicher Vorteil der Erfindung ist, dass der Schweller zusammen mit den Säulen geformt und entsprechend vergütet wird. Zusätzlich können die Bereiche eines Sitzquerträgers mit an die Seitenwand angeformt und gleichzeitig vergütet werden.

Optional können im Bereich der A- und B-Säule sowie im Schwellerbereich Sandwichbauteile, d.h. mehrlagige Blechbauteile zum Einsatz kommen, um in diesen besonders kritischen Bereichen zusätzlich Energie aufnehmen zu können.

Die Erfindung wird nachfolgend anhand eines schematischen Ausführungsbeispiels näher erläutert. Es zeigen:
- Figur 1: den Türrahmenbereich einer Seitenwand eines Kraftfahrzeugs, wie er aus dem Stand der Technik bekannt ist;
- Figur 2: in der Darstellungsweise der Figur 1 einen Türrahmenbereich eines Kraftfahrzeugs in der erfindungsgemäßen Ausführung;
- Figur 3: eine Seitenwand eines Kraftfahrzeugs mit Bereichen unterschiedlicher Festigkeit/Härte;
- Figur 4: ein Schnitt entlang der Linie IV-IV der Figur 3 und
- Figur 5: eine Seitenwand eines Kraftfahrzeugs mit Bereichen unterschiedlicher Festigkeit/Härte in einer von der Ausführungsform der Figur 3 abweichenden Verteilung.

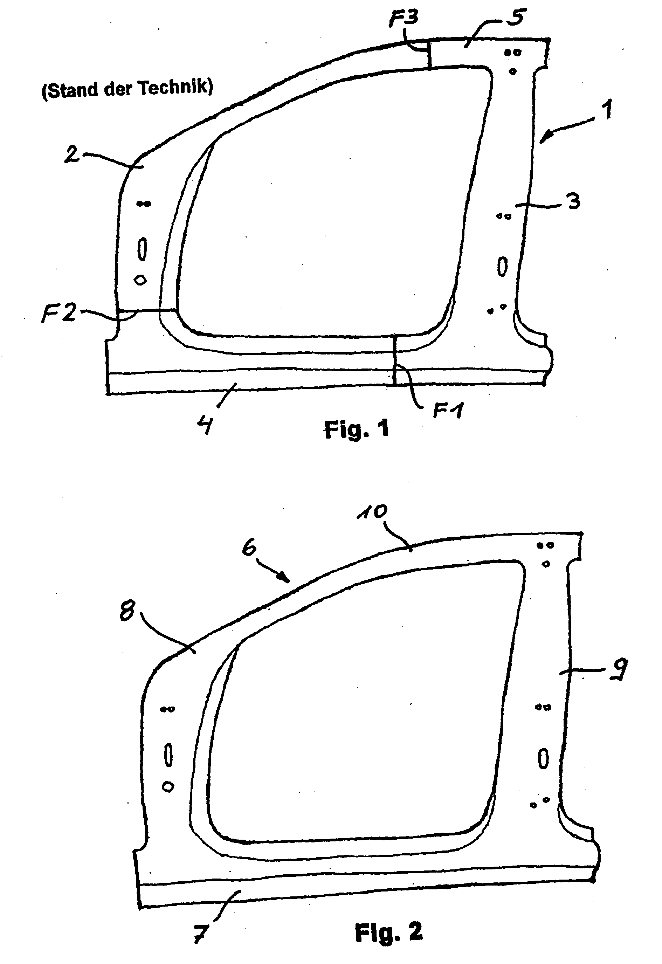

Figur 1 zeigt in der Seitenansicht den Türrahmenbereich einer strukturverstärkenden Seitenwand 1 mit einer A-Säule 2, einer B-Säule 3 und einem Schweller 4. Der Schweller 4 ist im Fußbereich mit der A-Säule 2 bzw. der B-Säule 3 verbunden, insbesondere verschweißt. Die Fügestellen sind durch F1 und F2 gekennzeichnet. Eine weitere Fügestelle F3 ist im Dachrahmenbereich 5 zwischen der B-Säule 3 und der A-Säule 2 vorhanden. Im Unterschied hierzu ist bei der erfindungsgemäß ausgestalteten Seitenwand 6, wie sie in Figur 2 dargestellt ist, keine derartige Fügestelle vorhanden. Die Seitenwand 6 ist einstückig aus einer entsprechend großen Blechplatine gefertigt, so dass der Schweller 7, die A-Säule 8, die B-Säule 9 und der Dachrahmenbereich 10 einstückig ausgebildet sind. Die Gesamtkontur entspricht der Ausführungsform der Figur 1.

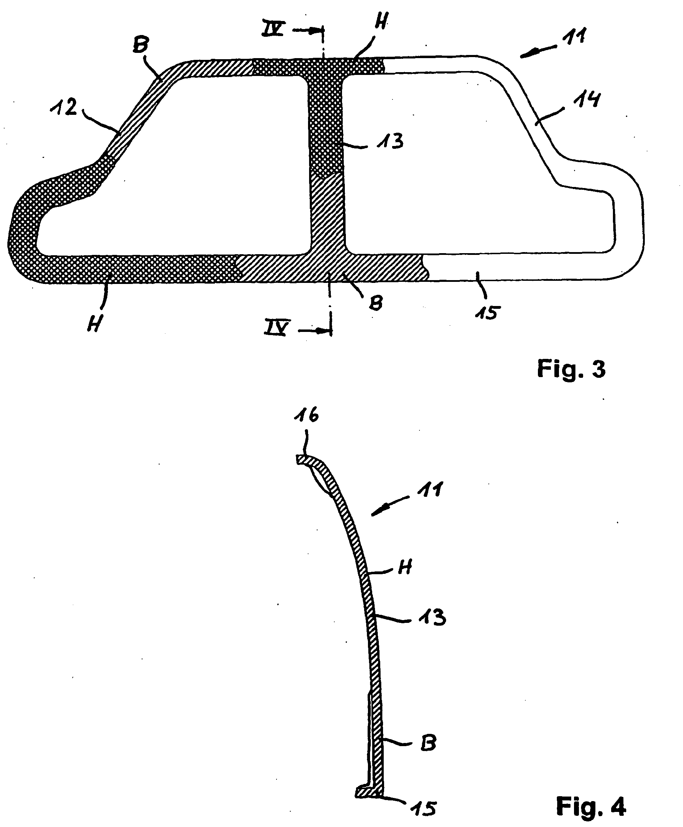

Das stark abstrahierte Beispiel der Figur 3 zeigt eine Seitenwand 11 eines Kraftfahrzeugs mit einer A-, B- und C-Säule 12, 13, 14, einem Schweller 15 und einem Dachrahmenbereich 16. Die gesamte Seitenwand 11 ist einstückig aus einer einzigen Blechplatine aus einem hochfesten Stahlwerkstoff gefertigt. Anhand der unterschiedlichen Schraffur wird verdeutlicht, dass die Seitenwand 11 Bereiche unterschiedlicher Festigkeit und Härte aufweist. Das Bezugszeichen H steht für härtere Bereiche, wie sie im vorderen Bereich des Schwellers 15 und im oberen Bereich der B-Säule 13 vorgesehen sind. Der untere, dem Schweller 15 zugewandte Bereich der B-Säule 13 ist gegenüber den härteren Bereichen H weicher gestaltet. Dieser weichere Bereich B ist einfach schraffiert. Ein ähnlich weicher Bereich B ist im oberen Abschnitt der A-Säule 12 zu erkennen. Die Aufteilung der Bereiche B, H ist beispielhaft gewählt, wobei insbesondere der obere Bereich der A-Säule je nach Auslegung auch etwas härter gestaltet sein kann, da dieser Bereich der Seitenwand 11 dazu genutzt werden kann, die Dachverstärkung unmittelbar in die Seitenwand 11 zu integrieren.

Eine zusätzliche Anpassung an die zu erwartenden Bauteilbelastungen kann durch die Verwendung sogenannter Tailored Rolled Blanks erfolgen, bei denen die Dicke der Blechplatine partiell unterschiedlich ist. Hierdurch kann das Deformationsverhalten der Seitenwand im Sinne einer hohen Energieabsorption gezielt beeinflusst werden. Figur 4 zeigt eine mögliche Dickenverteilung der Blechplatine im Bereich der B-Säule 13. Der dem Schweller 15 zugewandte untere Bereich der B-Säule 13 besitzt bei diesem Ausführungsbeispiel zwar eine geringere Härte, ist jedoch partiell dicker ausgebildet. Hieran schließt sich ein mittlerer härterer Bereich H an, der schließlich in den Dachrahmenbereich 16 übergeht, welcher wiederum partiell dicker, im Unterschied zum Fußbereich der B-Säule 13 allerdings mit größerer Härte ausgeführt ist. Die Dachverstärkung ist unmittelbar in die Seitenwand 11 integriert. Die Bereiche unterschiedlicher Dicke und Härte sind selbstverständlich auf das jeweilige Kraftfahrzeug abgestimmt.

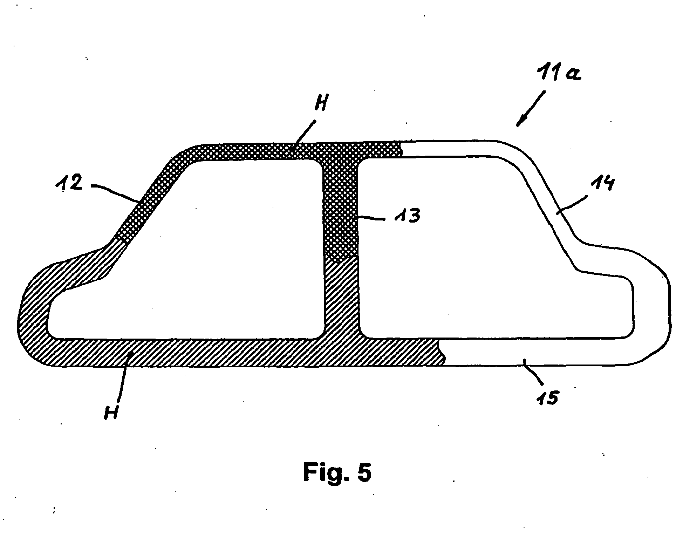

Figur 5 zeigt ebenfalls eine Seitenwand 11 a eines Kraftfahrzeugs, die hinsichtlich ihrer Geometrie derjenigen der Figur 3 entspricht. Es werden daher die bereits eingeführten Bezugszeichen verwendet. Der Unterschied gegenüber der Ausführungsform der Figur 3 ist, dass die Bereiche unterschiedlicher Festigkeit und Härte eine andere Verteilung aufweisen. Im Unterschied zu der Ausführungsform der Figur 3 ist der obere Bereich der A-Säule 12 sowie der obere Bereich der B-Säule 13 als härterer Bereich H gestaltet, wohingegen der gesamte untere Bereich, das heißt der Bereich, der dem Schweller 15 zugewandt ist, gegenüber den härteren Bereichen H weicher gestaltet ist. Dieser weichere Bereich B ist an der entsprechenden Schraffur zu erkennen. Grundsätzlich ist es möglich, das der gesamte obere Bereich der Seitenwand 11a, das heißt die A-Säule 12, die B-Säule 13 und die C-Säule 14 als härterer Bereich H ausgestaltet sind, wohingegen der gesamte untere dem Schweller 15 nahe Bereich als weicherer Bereich B konfiguriert ist.

### Bezugszeichen:

- 1 -: Seitenwand
- 2 -: A-Säule v. 1
- 3 -: B-Säule v. 1
- 4 -: Schweller v. 1
- 5 -: Dachrahmenbereich v. 1
- 6 -: Seitenwand
- 7 -: Schweller v. 6
- 8 -: A-Säule v. 6
- 9 -: B-Säule v. 6
- 10 -: Dachrahmenbereich v. 6
- 11 -: Seitenwand
- 11a: -Seitenwand
- 12 -: A-Säule
- 13 -: B-Säule
- 14 -: C-Säule
- 15 -: Schweller
- 16 -: Dachrahmenbereich

- B -: weicherer Bereich
- F1 -: Fügestelle v. 1
- F2 -: Fügestelle v. 1
- F3 -: Fügestelle v. 1
- H -: härterer Bereich

## Patentansprüche

1. Seitenwand eines Kraftfahrzeugs mit einem im unteren Bereich verlaufenden Schweller (7, 15), mit einem Dachrahmenbereich (10, 16) und mit sich zwischen dem Schweller (7, 15) und dem Dachrahmenbereich (10, 16) erstreckenden A- und B-Säulen (8, 9; 12, 13, 14), wobei der Schweller (7, 15) die Säulen (8, 9; 12, 13, 14) und der Dachrahmenbereich (10, 16) einstückig aus einer entsprechend großen Blechplatine gefertigt sind, wobei die Blechplatine aus einem hochfesten Stahlwerkstoff besteht, und wobei die in einem Crashfall des Kraftfahrzeugs hochbelasteten Bereiche (H) der Seitenwand (6, 11, 11a) partiell gehärtet sind, **dadurch gekennzeichnet, dass** die Blechplatine durch teilweises Abwalzen Bereiche unterschiedlicher Dicke aufweist, wobei die Bereiche größerer Dicke eine geringere Härte aufweisen, als die Bereiche geringerer Dicke und wobei härtere Bereiche (H) im vorderen Bereich des Schwellers (15) und im oberen Bereich der B-Säule (13) vorgesehen sind, wobei der untere, dem Schweller (15) zugewandte Bereich (B) der B-Säule (13) gegenüber den härteren Bereichen (H) weicher gestaltet ist und wobei der obere Bereich der A-Säule ein gehärteter Bereich ist.

2. Seitenwand eines Kraftfahrzeugs mit einem im unteren Bereich verlaufenden Schweller (7, 15), mit einem Dachrahmenbereich (10, 16) und mit sich zwischen dem Schweller (7, 15) und dem Dachrahmenbereich (10, 16) erstreckenden A- and B- Säulen (8, 9; 12, 13, 14), wobei der Schweller (7, 15) die Säulen (8, 9; 12, 13, 14) und der Dachrahmenbereich (10, 16) einstückig aus einer entsprechend großen Blechplatine gefertigt sind, wobei die Blechplatine aus einem hochfesten Stahlwerkstoff besteht, und wobei die in einem Crashfall des Kraftfahrzeugs hochbelasteten Bereiche (H) der Seitenwand (6, 11, 11a) partiell gehärtet sind, **dadurch gekennzeichnet, dass** die Blechplatine durch teilweises Abwalzen Bereiche unterschiedlicher Dicke aufweist, wobei die Bereiche größerer Dicke eine geringere Härte aufweisen, als die Bereiche geringerer Dicke, wobei härtere Bereiche (H) im oberen Bereich der A-Säule (12) und im oberen Bereich der B-Säule (13) vorgesehen sind, wobei der untere, dem Schweller (15) zugewandte Bereich (B) der A-Säule (12) und der B-Säule (13) gegenüber den härteren Bereichen (H) weicher gestaltet ist.

3. Seitenwand nach Anspruch 1 oder 2, **dadurch gekennzeichnet, dass** eine Anbindung eines Sitzquerträgers einstückig angeformt ist.

## Claims

1. Motor vehicle side panel with a seal (7, 15) running in the lower region, with a roof frame region (10, 16) and with A and B pillars (8, 9; 12, 13, 14) extending between the seal (7, 15) and the roof frame region (10, 16), wherein the seal (7, 15), the pillars (8, 9; 12, 13, 14) and the roof frame region (10, 16) are manufactured as a single piece from a correspondingly sized sheet-metal blank, wherein the sheet-metal blank is composed of a high-strength steel material, and wherein those regions (H) of the side panel (6, 11, 11a) which are highly loaded in the event of the motor vehicle crashing are partially hardened, **characterized in that** the sheet-metal blank has regions of differing thickness by parts of it being rolled, the regions of greater thickness having a lower degree of hardness than the regions of smaller thickness, and harder regions (H) being provided in the front region of the seal (15) and in the upper region of the B pillar (13), the lower region (B) of the A pillar (12) and of the B pillar (13), which region faces the seal (15), being of softer design than the harder regions (H), and the upper region of the A pillar being a hardened region.

2. Motor vehicle side panel with a seal (7, 15) running in the lower region, with a roof frame region (10, 16) and with A and B pillars (8, 9; 12, 13, 14) extending between the seal (7, 15) and the roof frame region (10, 16), wherein the seal (7, 15), the pillars (8, 9; 12, 13, 14) and the roof frame region (10, 16) are manufactured as a single piece from a correspondingly sized sheet-metal blank, wherein the sheet-metal blank is composed of a high-strength steel material, and wherein those regions (H) of the side panel (6, 11, 11a) which are highly loaded in the event of the motor vehicle crashing are partially hardened, **characterized in that** the sheet-metal blank has regions of differing thickness by parts of it being rolled, the regions of greater thickness having a lower degree of hardness than the regions of smaller thickness, harder regions (H) being provided in the upper region of the A pillar (12) and in the upper region of the B pillar (13), the lower region (B) of the A pillar (12) and of the B pillar (13), which region faces the seal (15), being of softer design than the harder regions (H).

3. Side panel according to Claim 1 or 2, **characterized in that** a connection of a seat crossmember is moulded integrally.

## Revendications

1. Panneau latéral d'un véhicule automobile muni d'un longeron (7, 15) s'étendant dans la zone inférieure, avec une zone de cadre de toit (10, 16) et avec des montants A et B (8, 9 ; 12, 13, 14) s'étendant entre le longeron (7, 15) et la zone de cadre de toit (10, 16), le longeron (7, 15), les montants (8, 9 ; 12, 13, 14) et la zone de cadre de toit (10, 16) étant fabriqués d'un seul tenant à partir d'une plaque de tôle d'une grandeur correspondante, la plaque de tôle étant constituée d'un matériau en acier hautement résistant, et les zones (H) du panneau latéral (6, 11, 11a) fortement chargées en cas de choc du véhicule automobile étant en partie durcies, **caractérisé en ce que** la plaque de tôle présente des zones d'épaisseur différente du fait d'un laminage partiel, les zones d'épaisseur plus importante présentant une dureté inférieure par rapport aux zones d'épaisseur plus faible et les zones plus dures (H) étant prévues dans la zone avant du longeron (15) et dans la zone supérieure du montant B (13), la zone inférieure (B) du montant B (13) tournée vers le longeron (15) étant conçue plus souple par rapport aux zones plus dures (H) et la zone supérieure du montant A étant une zone durcie.

2. Panneau latéral d'un véhicule automobile muni d'un longeron (7, 15) s'étendant dans la zone inférieure, avec une zone de cadre de toit (10, 16) et avec des montants A et B (8, 9 ; 12, 13, 14) s'étendant entre le longeron (7, 15) et la zone de cadre de toit (10, 16), le longeron (7, 15), les montants (8, 9 ; 12, 13, 14) et la zone de cadre de toit (10, 16) étant fabriqués d'un seul tenant à partir d'une plaque de tôle d'une grandeur correspondante, la plaque de tôle étant constituée d'un matériau en acier hautement résistant, et les zones (H) du panneau latéral (6, 11, 11a) fortement chargées en cas de choc du véhicule automobile étant en partie durcies, **caractérisé en ce que** la plaque de tôle présente des zones d'épaisseur différente du fait d'un laminage partiel, les zones d'épaisseur plus importante présentant une dureté inférieure par rapport aux zones d'épaisseur plus faible, les zones plus dures (H) étant prévues dans la zone supérieure du montant A (12) et dans la zone supérieure du montant B (13), la zone inférieure (B) du montant A (12) et du montant B (13) tournée vers le longeron (15) étant conçue plus souple par rapport aux zones plus dures (H).

3. Panneau latéral selon la revendication 1 ou 2, **caractérisé en ce qu'**une attache d'une traverse de siège est formée d'un seul tenant.
